(19) Europäisches Patentamt
European Patent Office
Office européen des brevets

(11) Veröffentlichungsnummer: **0 148 351**
**A1**

(12) **EUROPÄISCHE PATENTANMELDUNG**

(21) Anmeldenummer: **84113164.2**

(22) Anmeldetag: **02.11.84**

(51) Int. Cl.⁴: **G 06 K 7/10**, G 06 F 3/02, G 04 G 15/00, G 11 B 31/00

(30) Priorität: **30.11.83 DE 3343226**

(43) Veröffentlichungstag der Anmeldung: **17.07.85 Patentblatt 85/29**

(84) Benannte Vertragsstaaten: **AT BE CH DE FR GB IT LI LU NL SE**

(71) Anmelder: **TELEFUNKEN Fernseh und Rundfunk GmbH, Göttinger Chaussee 76, D-3000 Hannover 91 (DE)**

(72) Erfinder: **Backnick, Werner, Dipl.-Ing., Am Soltekampe 161, D-3000 Hannover 91 (DE)**
Erfinder: **Streckenbach, Wulf-Christian, Dipl.-Ing., Deveserstrasse 1A, D-3005 Hemmingen 1 (DE)**
Erfinder: **Sander, Hans-Dieter, Dipl.-Ing., Osnabrücker Landstrasse 11, D-3016 Seelze 4 (DE)**

(74) Vertreter: **Einsel, Robert, Dipl.-Ing., TELEFUNKEN Fernseh und Rundfunk GmbH Göttinger Chaussee 76, D-3000 Hannover 91 (DE)**

(54) **Verfahren zur Programmierung eines Empfängers, insbesondere eines Videorecorders.**

(57) Verfahren zur Programmierung eines Empfängers, insbesondere eines Videorecorders auf Empfang und/oder Aufzeichnung bestimmter Sendungen, bei dem erfindungsgemäß den Programmanzeigen im Fernsehen optischcodierte Kennwerte zugeordnet sind, die mit einem optischen Lesegerät durch Auflage auf den Bildschirm eines Fernsehempfängers für die Programmierung abgenommen werden.

EP 0 148 351 A1

Verfahren zur Programmierung eines Empfängers, insbesondere eines Videorecorders

Es besteht der Wunsch, Empfangsgeräte der Unterhaltungselektronik auf bestimmte Sendungen zu programmieren, damit z.B. ein Videorecorder in Abwesenheit einer Bedienungsperson selbsttätig eine Aufzeichnung durchführt. Die Programmierung eines Videorecorders verlangt vom Bedienenden eine umfangreiche Kenntnis der meist komplizierten Bedienungsanleitung, nach welcher für eine bestimmte Sendung, Sendeanstalt, Wochentag, Anfangs- und Endzeit bzw. Dauer der Sendung in Minuten durch Betätigen einer Vielzahl von Tasten eingegeben werden müssen.

Es ist bekannt, den Programmiervorgang zu vereinfachen, indem über einen Lichtgriffel mit Hilfe einer Barcodetabelle jede der zur Programmierung erforderlichen Informationen einzeln in einer bestimmten Reihenfolge, z.B. Anfang in Stunden oder Minuten, Dauer der Aufzeichnung, Wochentag und Programm, in den Prozessor des Videorecorders eingegeben wird. Diese Lösung hat den Nachteil, daß die Aufnahmedaten festgeschrieben sind und bei Änderung der Sendezeiten Fehlaufnahmen erfolgen können.

Weiter ist bekannt, wie z.B. in "Rundfunktechnische Mitteilungen", Jahrgang 26 (1982) H. 6 ausgeführt, Informationen für die Programmierung aus Videotexttafeln mit Programmanzeigen zu entnehmen. Hierzu ist ein Mikrocomputer erforderlich, welcher mit dem Videotextdecoder im Fernseher, dem Videorecorder und einer zusätzlichen Programmtastatur über Datenleitungen verbunden ist.

Weiter ist bekannt, mit Hilfe eines in einer Funkzeitschrift ausgedruckten Barcodes die gewünschte Sendung durch Einlesen über Lichtgriffel in den Prozessor eines Empfängers oder Videorecorders zu programmieren.

Auch kann statt des Barcodes in der Programmzeitschrift zu jeder Sendung ein 16stelliger Zahlencode ausgedruckt werden, welcher durch Tastendruck in einen entsprechenden Empfänger z.B. Videorecorder eingegeben werden muß.

Vorteilhaft bei diesen Lösungen ist, daß die Sendeanstalten einen mit der Programmierung übereinstimmenden Code senden, damit nach Empfang dieses Codes z.B. der Videorecorder ereignisgesteuert auf Aufnahme schalten kann. Dieses als Video-Programm-System (VPS) bezeichnete Verfahren ist in der Erprobungsphase. Es zeigt sich allerdings, daß z.B. das Ausdrucken des Barcodes in den Funkzeitschriften auf Schwierigkeiten stößt.

Aufgabe der Erfindung ist es, ein einfaches alternatives Verfahren zur Programmierung eines Empfängers aufzuzeigen, bei welchem die erforderlichen Kenndaten direkt vom Bildschirm z.B. eines beliebigen Fernsehempfängers abgenommen werden können, ohne daß z.B. eine Datenleitung und damit eine Hardwareschnittstelle zwischen dem im Fernsehgerät befindlichen Videotextdecoder und dem den Videorecorder steuernden Mikroprozessor erforderlich ist.

Diese Aufgabe wird durch die im Anspruch 1 beschriebene Erfindung gelöst. Vorteilhafte Weiterbildungen der Erfindung werden in den Unteransprüchen beschrieben.

Die Erfindung ist grundsätzlich mit jedem Fernsehgerät anwendbar, indem ein optisches Lesegerät auf die Stelle des Bildschirms aufgelegt wird, auf welcher in optisch-codierter Form die Kenndaten für die Programmierung einer zugehörigen Sendung dargestellt sind. Besonders geeignet für eine opto-elektronische Abnahme von Programmdaten sind Angaben in Videotextseiten oder auch in Bildschirmtextdarstellungen, da es möglich ist, über eine Stoppfunktion die für die Übernahme erforderliche Verweilzeit zu steuern.

Die Abnahme der Informationen vom Bildschirm geschieht mit dem erfindungsgemäßen optischen Lesegerät in einer Anordnung von einer oder mehreren Fotodioden, welche durch Hell-Dunkelsteuerung der Bildpunkte an der den Code enthaltenden Auflagestelle gesteuert wird. Der Code auf dem Bildschirm erscheint dabei als feststehendes Bild, d.h. für eine bestimmte Sendung wird eine ausschließlich dieser Sendung zugehörige Konfiguration von Kenndaten auf dem Bildschirm dargestellt. Die Darstellung dieser Kenndaten kann auf vielfältige Art und Weise erfolgen, wobei die Codierung durch eine Reihe voneinander getrennter, aufeinanderfolgender graphischer Zeichen, sogenannter Charaktere, erfolgt. Diese Charaktere können z.B. in Form einer abgestuften Farb- oder Grautreppe ausgesendet werden. Bei dieser Codierungsart erfolgt im Lesegerät eine Auswertung der Intensität der einzelnen Charaktere durch Umsetzung der intensitätsabhängigen Analogwerte mittels eines A/D-Wandlers in eine für die Steuerung eines Mikrocomputers erforderliche digitale Datenfolge. Eine andere Codiermöglichkeit für die einzelnen Charaktere besteht aus einer Anordnung heller oder dukler Bildpunkte sowohl in horizontaler als auch in vertikaler Richtung. Bei dieser Darstellung kann durch das Lesegerät eine Hell-Dunkelauswertung erfolgen. Eine Umsetzung durch einen A/D-Wandler entfällt, da durch diese Art der Codierung bereits Daten in Form von Bit-Folgen entstehen. Je nach Wahl des Codes ist die auswertbare Zeichenmenge pro Charakter recht unterschiedlich. Die Anzahl der erforderlichen Charaktere richtet sich nach der für die Programmierung erforderlichen Datenmenge, wobei die Programierung mit dem von den Sendeanstalten nach dem VPS-System ausgesendeten Steuerdaten übereinstimmen muß. Um Fehlprogrammierungen zu vermeiden, ist es erforderlich, zur Kontrolle der eingegebenen Datenfolge im letzten Charkter des Codes eine Prüfziffer mit zu übertragen.

Im folgenden wird die Erfindung anhand von Zeichnungen näher erläutert.

Darin zeigen:

Fig. 1 ein Blockschaltbild eines erfindungsgemäßen optischen Lesegerätes,

Fig. 2a - d verschiedene optische Codierungsmöglichkeiten,
Fig. 3 in einer Tabelle eine mögliche Datenfolge.

Fig. 1 zeigt ein Blockschaltbild eines erfindungsgemäßen optischen Lesegerätes. Es wird vorausgesetzt, daß die senderseitige Codierung in Form einer Hell-Dunkelsteuerung erfolgt, sodaß die Daten bereits als Impulse durch die Auswertung in den Photodioden anfallen. Auf dem Bildschirm 1 des Fernsehempfängers wird die lichtempfindliche Eingangsstufe 2 an der Stelle aufgesetzt, an welcher die für die Programmierung vorgesehene codierte Charaterfolge abgebildet wird. Die in der Eingangsstufe 2 befindlichen Photodioden wandeln das optische Code-Signal in elektrische Impulse 7 um. Diese gelangen zum Hochpaß 3, welcher eine durch das Nachleuchten des Bildschirms 1 unerwünschte Integrationswirkung aufeinanderfolgender Impulse unterdrücken soll. Nach Durchlaufen des Hochpasses 3 werden die noch verschliffenen Impulse 8 im Begrenzerverstärker 4 verstärkt und in ihrer Amplitude derart begrenzt, daß am Eingang der Stufe 5 ein rechteckförmiges Signal 9 zur Verfügung steht. Die Stufe 5 stellt einen Zwischenspeicher in Form eines Schieberegisters dar. Außerdem enthält die Stufe 5 einen das Schieberegister steuernden Taktoszillator der vom anstehenden rechteckförmigen Signal 9 synchronisiert wird. Die Funktion des Schieberegisters besteht darin, die mit hoher Bitfolgefrequenz anstehenden Impulse 9 zwischenzuspeichern, um eine serielle Ausgabe mit einer niedrigeren Taktrate an den den Recorder steuernden Mikroprozessor zu ermöglichen.

Fig. 2a - d zeigt verschiedene optische Codiermöglichkeiten, die für eine optoelektronische Abnahme vom Bildschirm geeignet sind. Dabei muß der Beginn des ersten Charakters als Start für die Programmierung derart ausgebildet sein, daß bei der elektronischen Umwandlung im optischen Lesegerät ein "high" Zustand erkannt wird.

In Fig. 2a ist eine optische Codierung durch abgestufte Itensität mittels einer Farbtreppe dargestellt. Bei dieser Form der Codierung ist es erforderlich, für die spätere Auswertung der einzelnen Charaktere einen Normierungswert festzulegen, der in diesem Beispiel dem Weißpegel entspricht. Es können durch die verschiedenen Farben verschiedene Pegel = Charaktere dargestellt werden, die in einem A/D-Wandler in eine entsprechende Bit-Folge umgesetzt werden. Dabei ergibt sich bei acht Farben eine Zeichenmenge von acht je Charakter.

In Fig. 2b ist eine optische Codierung mittels voneinander getrennter graphischer Zeichen dargestellt. Die Anordnung ist so gewählt, daß innerhalb einer Zeile zwei Bildpunkte pro Charakter dargestellt werden können, wobei die Größe der "quadratischen" Bildpunkte sich über mehrere Zeilen z.B. 2 bzw. 3 mit entsprechender Ausdehnung innerhalb einer Zeile z.B. 0,5 /u sec erstrecken kann. Bei dieser Art der Codierung ist eine direkte Umsetzung des optischen Codes in eine Impulsfolge möglich, so daß kein A/D-Wamdler benötigt wird. Die dargestellte Zeichenmenge je Charakter ist = $2^6$ = 64 je Charakter.

In Fig. 2c ist ebenfalls eine optische Codiermöglichkeit mittels getrennter graphischer Zeichen durch den beim Bildschirmtext angewendeten DRCS-Zeichensatz dargestellt. Innerhalb einer Zeit $t_1$ werden zwei Informationen je Charakter dargestellt, wobei zu jedem Charakter 10 untereinander liegende Zeilen gehören, so daß die darstellbare Zeichenmenge je Charakter $2^{20}$ ist.

In Fig. 2d wird eine optische Codiermöglichkeit durch graphische Zeichen in Form einer vertikalen Zeilenaustastung aufgezeigt. Hier werden untereinanderliegende Zeilen des ersten Halbbildes innerhalb eines Zeitfensters $t_1$ für die Codierung ausgewertet, wobei jeder dieser Zeilen eine bestimmte Wertigkeit zugeordnet wird. So kann z.B. die Zeile n eine Wertigkeit von 8, die Zeile n + 1 = 4, die Zeile n + 2 = 2, die Zeile n + 3 = 1, die Zeile n + 4 wieder die Wertigkeit von 8, die Zeile n + 5 wieder die Wertigkeit von 4 usw. aufweisen. Ist eine Zeile des ersten Halbbildes im Zeitfenster $t_1$ weiß gesteuert, bedeutet das eine der oben angegebenen Wertigkeiten. Bei Schwarzsteuerung ist die Bedeutung = null. Auf diese Weise können beliebig viele Zeichen dargestellt werden.

Fig. 3 zeigt in einer Tabelle eine mögliche Datenfolge. Mit acht Charakteren zu je 6 Bit werden die für eine Programmierung erforderlichen Angaben dargestellt.

T E L E F U N K E N
Fernseh und Rundfunk G m b H
Göttinger Chaussee 76

3000 Hannover 91

Hannover, den 29.11.1983
PTL-H Sn/vß H 83/93

## Patentansprüche

1. Verfahren zur Programmierung eines Empfängers, insbesondere eines Videorecorders auf Empfang und/ oder Aufzeichnung bestimmter Sendungen, bei dem Kennwerte für die Programmierung aus den Programmanzeigen im Fernsehen abgenommen werden, dadurch gekennzeichnet, daß den einzelnen Sendungen innerhalb von Programmanzeigen optisch-codierte Kennwerte zugeordnet sind und daß die Abnahme der optisch-codierten Kennwerte für die Programmierung eines Empfängers mit einem optischen Lesegerät durch Auflage auf die die Kennwerte anzeigende Bildschirmstelle erfolgt.

2. Verfahren nach Anspruch 1, dadurch gekennzeichnet, daß die optisch-codierten Kennwerte mit dem von den Sendeanstalten nach dem VPS (Video-Programm-System) ausgesendeten Daten übereinstimmen.

3. Verfahren nach Anspruch 1, dadurch gekennzeichnet, daß für eine Kontrolle der abgetasteten Kennwerte eine Prüfziffer im optischen Code vorhanden ist.

4. Verfahren nach Anspruch 1, <u>dadurch gekennzeichnet</u>, daß die optisch-codierten Kennwerte sichtbar auf dem Bildschirm erscheinen.

5. Verfahren nach Anspruch 1, <u>dadurch gekennzeichnet</u>, daß bei Videotext oder Bildschirmtext die optischen Kennwerte verdeckt gesendet werden.

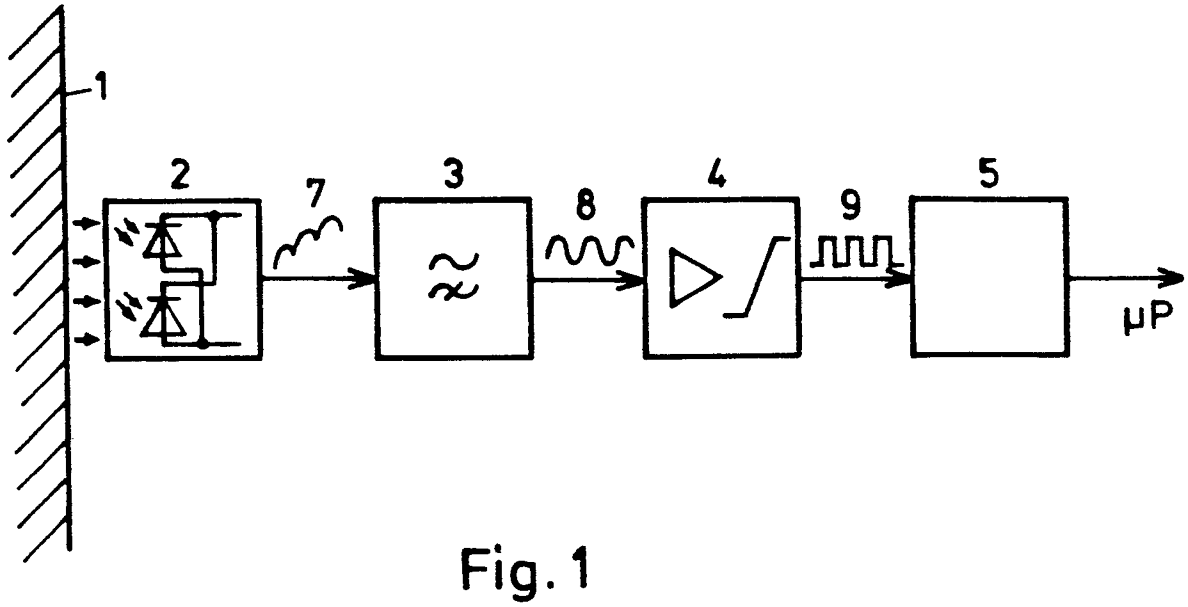
1
2
7
3
8
4
9
5
µP

Fig. 1

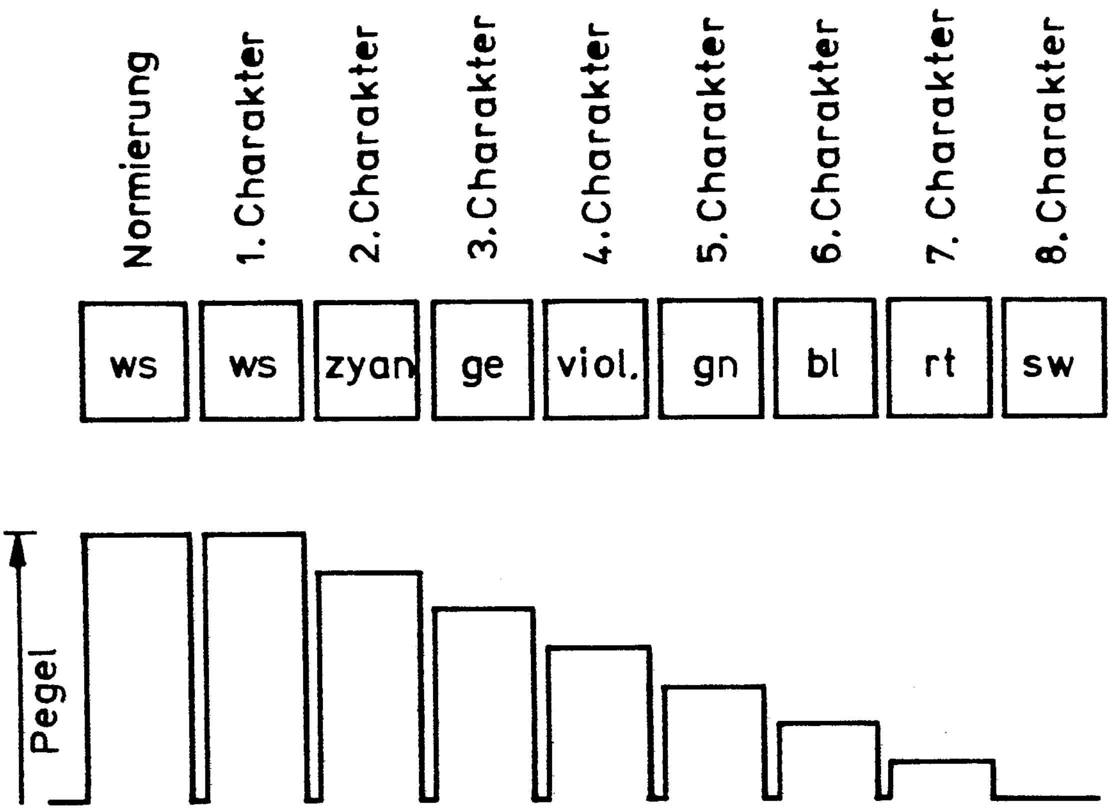
Normierung
1. Charakter
2. Charakter
3. Charakter
4. Charakter
5. Charakter
6. Charakter
7. Charakter
8. Charakter
ws
ws
zyan
ge
viol.
gn
bl
rt
sw
Pegel

Fig. 2a

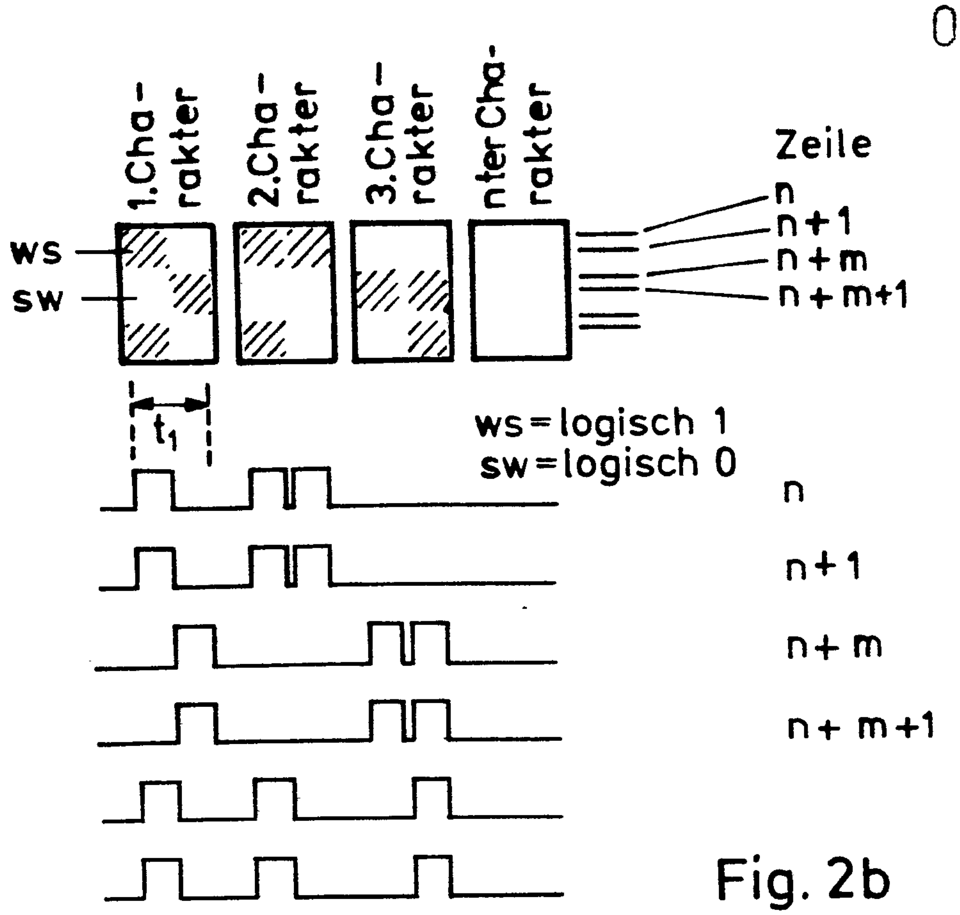
1.Charakter
2.Charakter
3.Charakter
nter Charakter
Zeile
n
n+1
n+m
n+m+1
ws
sw
$t_1$
ws = logisch 1
sw = logisch 0
n
n+1
n+m
n+m+1

Fig. 2b

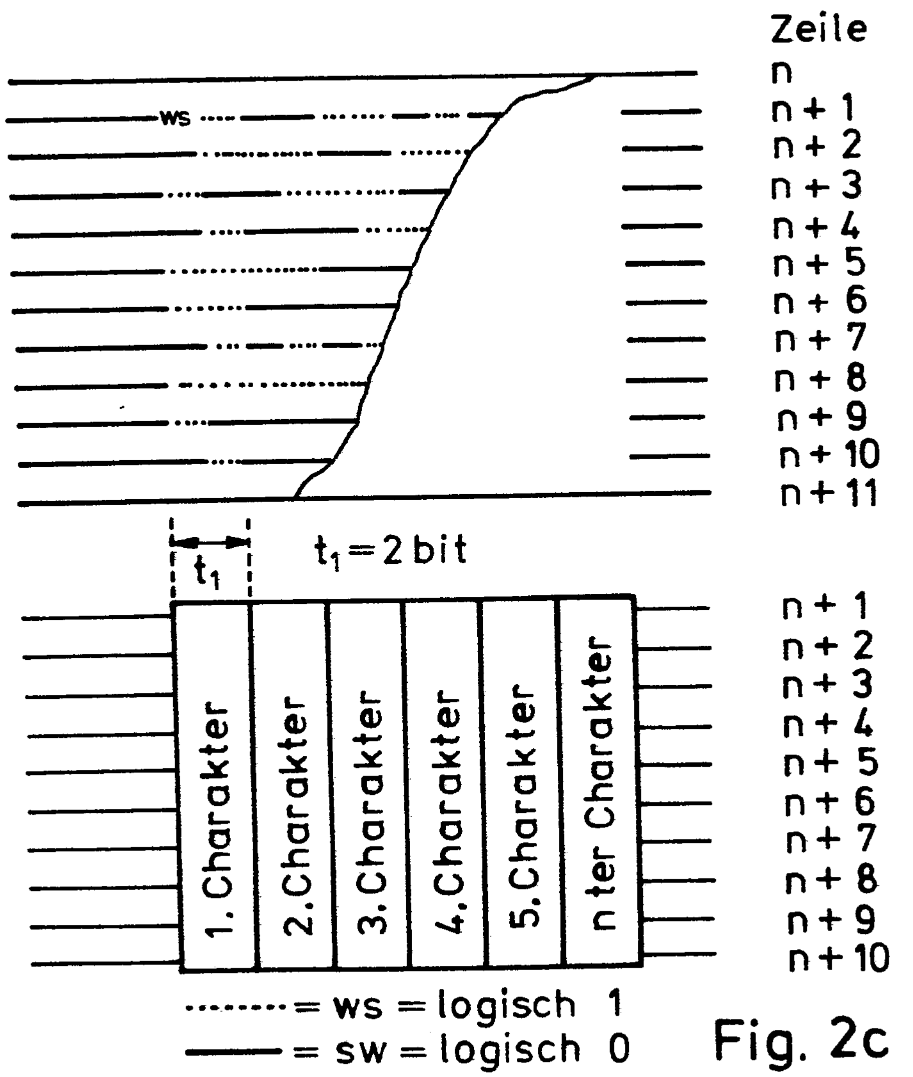
Zeile
n
n+1
n+2
n+3
n+4
n+5
n+6
n+7
n+8
n+9
n+10
n+11
ws
$t_1$
$t_1$ = 2 bit
1. Charakter
2. Charakter
3. Charakter
4. Charakter
5. Charakter
n ter Charakter
n+1
n+2
n+3
n+4
n+5
n+6
n+7
n+8
n+9
n+10
....... = ws = logisch 1
——— = sw = logisch 0

Fig. 2c

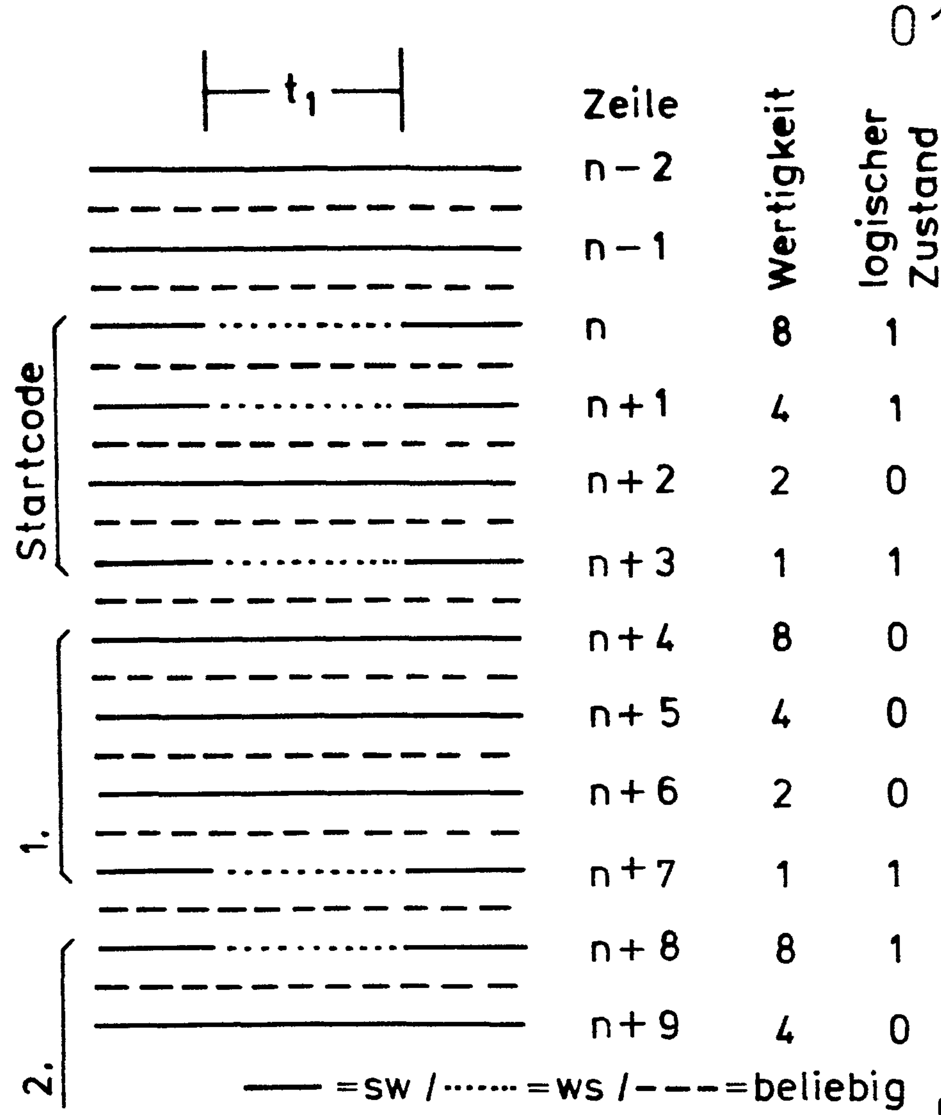


Fig.2d

| Charakter | Programmierung | Zahlenmenge | |
|---|---|---|---|
| 1 | Stunde | 0 .........23 | 5 bit |
| 2 | Minute | 0 .........59 | 6 bit |
| 3 | Tag/Monat unger.<br>Tag/Monat gerade | 1 ..........31<br>32 .........63 | 6 bit |
| 4 | Dauer | 1....1024 [min] | 6 bit |
| 5 | Dauer<br>Adresse | | 4 bit<br>2 bit |
| 6 | Programmquelle | 0...........63 | 6 bit |
| 7 | Nation<br>Programmart | 0..........15 | 4 bit<br>2 bit |
| 8 | Programmart<br>Prüfziffer | | 2 bit<br>4 bit |

Fig. 3

Europäisches Patentamt

**EUROPÄISCHER RECHERCHENBERICHT**

0148351

Nummer der Anmeldung

EP 84 11 3164

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | GB-A-2 111 194 (BRITISH BROADCASTING CORPORATION)<br>* Seite 1, Zeilen 30-56, 91-115; Seite 1, Zeile 1 28 - Seite 2, Zeile 21; Figuren 1,2 *<br>--- | 1,4 | G 06 K 7/10<br>G 06 F 3/02<br>G 04 G 15/00<br>G 11 B 31/00 |
| A | DE-A-2 757 264 (KÖRTING RADIO WERKE)<br>* Seite 3, Zeile 1 - Seite 4, Zeile 16 *<br>--- | 1 | |
| A | GB-A-2 109 598 (SONY)<br>* Zusammenfassung, Figur 3 *<br>--- | 1 | |
| P,A | EP-A-0 098 956 (DEUTSCHE THOMSON-BRANDT)<br>* Seite 1, Zeile 1 - Seite 2, Zeile 7 *<br>--- | | RECHERCHIERTE SACHGEBIETE (Int. Cl. 3) |
| A | GB-A-2 034 995 (BRITISH BROADCASTING CORPORATION)<br>* Ansprüche 1, 4-7 *<br>--- | | G 04 G 15/00<br>H 01 H 43/00<br>G 06 K 7/00<br>G 06 K 9/00<br>G 06 K 19/08<br>G 11 B 15/00<br>G 11 B 27/00<br>G 11 B 31/00<br>H 04 N 5/00 |
| A | EP-A-0 042 600 (INTERNATIONAL STANDARD ELECTRIC CORPORATION)<br>--- -/- | | |

Der vorliegende Recherchenbericht wurde für alle Patentansprüche erstellt.

| Recherchenort | Abschlußdatum der Recherche | Prüfer |
|---|---|---|
| BERLIN | 25-02-1985 | ROGNONI M.G.L. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03 82

Europäisches Patentamt

# EUROPÄISCHER RECHERCHENBERICHT

0148351

Nummer der Anmeldung

EP 84 11 3164



## EINSCHLÄGIGE DOKUMENTE

| Kategorie | Kennzeichnung des Dokuments mit Angabe, soweit erforderlich der maßgeblichen Teile | Betrifft Anspruch | KLASSIFIKATION DER ANMELDUNG (Int. Cl. 3) |
|---|---|---|---|
| A | NACHRICHTENTECHNISCHE ZEITSCHRIFT N.T.Z., Band 35, Nr. 6, Juni 1982, Schwäbisch Gmünd Deutschland; H.E. KRÜGER "Das digitale Fernsehkennungssystem ZPS, Seiten 368-376<br>----- | | |

RECHERCHIERTE SACHGEBIETE (Int. Cl. 3)

Der vorliegende Recherchenbericht wurde für alle Patentansprüche erstellt

| Recherchenort | Abschlußdatum der Recherche | Prüfer |
|---|---|---|
| BERLIN | 25-02-1985 | ROGNONI M.G.L. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82